# EUROPEAN PATENT APPLICATION

(11) **EP 4 843 768 A1**
(43) Date of publication of application: **25.11.2026**
(21) Application number: 26180006.4
(22) Date of filing: 20.05.2026
(51) Int. Cl.: B32B 1/00, B32B 25/16, B32B 27/08, B32B 27/32, B32B 27/34, B32B 27/36, C08L 23/10, C08L 25/04, C08L 67/00, C08L 77/00

(54) **MULTI-CHAMBER CONTAINER WITH EASY PEEL LAYER**

(30) Priority: 20.05.2025 US 202563809274 P
(71) Applicant: Kraton Polymers Nederland B.V., 1322 CE Almere (NL)
(72) Inventor: Bhattacharya, Aparajita, The Woodlands, 77380 (US)
(74) Representative: Henkel & Partner mbB

(57) **Abstract**

The disclosure relates to a multi-chamber container comprising a first multilayer film and a second multilayer film sealed together at selected seal regions. Each of the first multilayer film and the second multilayer film comprises an outer layer, a core layer, and an easy peel layer. The easy peel layers of the first and second multilayer films are positioned facing one another. The selected seal regions comprise peripheral seal regions forming a perimeter seal defining an outer boundary of the container and an intermediate seal region forming an easy peel seal separating adjacent chambers. Unsealed portions of the first and second multilayer films between the selected seal regions define the adjacent chambers. The easy peel layer contains polypropylene and a blend of hydrogenated styrenic block copolymers having different diblock contents. The easy peel seal exhibits a peel strength of 5-25 N/15 mm, as measured according to ASTM F88.

## Description

### FIELD

The disclosure relates to a multi-chamber container with an easy peel layer comprising styrenic block copolymers.

### BACKGROUND

Multi-chamber containers are used where two or more fluid components must be stored separately and mixed shortly before use. Such containers are useful in applications involving incompatible or separately stored components, including medical therapies, parenteral nutrition, diagnostics, and certain industrial or pharmaceutical delivery systems. Maintaining separate chambers until a defined mixing step can improve product stability, shelf life, and control over component mixing.

Flexible multi-chamber containers are commonly formed from multilayer films that are sealed together to define chamber spaces and seal regions. The films may include layers selected to provide mechanical strength, flexibility, thermal resistance, and sealability. Seal regions can include peripheral seals defining an outer boundary of the container and one or more intermediate seals separating adjacent chambers. The intermediate seals are typically peelable or frangible seals configured to remain intact during storage and handling, but to open under an applied force to permit mixing.

A continuing challenge is providing intermediate seals with predictable peel strength over a useful heat-sealing window. Inconsistent seal performance can result in premature rupture, incomplete opening, or seals that are too strong to open manually under intended use conditions.

There remains a need for multilayer films and multi-chamber containers that provide controlled easy-peel seal performance, including through easy peel layers comprising polypropylene and hydrogenated styrenic block copolymers (HSBCs).

### SUMMARY

In one aspect, a multi-chamber container comprises first and second multilayer films sealed together at selected seal regions. Each multilayer film comprises, consists essentially of, or consists of an outer layer, a core layer, and an easy peel layer, with the easy peel layers facing one another. The selected seal regions include peripheral seal regions forming a perimeter seal and an intermediate seal region forming an easy peel seal that separates adjacent chambers and is manually peelable to place the adjacent chambers in fluid communication.

The easy peel layer comprises, consists essentially of, or consists of 60-90 wt.% polypropylene and 10-40 wt.% of a blend of two or more hydrogenated styrenic block copolymers (HSBCs). The HSBC blend includes HSBCs satisfying at least two of: (i) Mp 180-250 kg/mol, diblock content 3-15 wt.%, and vinyl aromatic content 5-25 wt.%; (ii) Mp 100-200 kg/mol, diblock content 20-40 wt.%, and vinyl aromatic content 5-25 wt.%; and (iii) Mp 50-150 kg/mol, diblock content 50-95 wt.%, and vinyl aromatic content 15-45 wt.%, each based on the respective HSBC.

In embodiments, the core layer comprises, consists essentially of, or consists of 10-40 wt.% of one or more HSBCs and 60-90 wt.% of one or more olefin-based polymers. The easy peel seal can exhibit a peel strength of 5-25 N/15 mm, as measured according to ASTM F88, and can exhibit cohesive peel behavior across a continuous sealing temperature interval of at least 10°C within a sealing temperature range of 100-140°C.

In another aspect, a film comprising the easy peel layer is provided. In another aspect, a method of making a multi-chamber container comprises positioning the first and second multilayer films with the easy peel layers facing one another and sealing the films at peripheral and intermediate seal regions to define the adjacent chambers and the easy peel seal.

### BRIEF DESCRIPTION OF THE DRAWINGS

FIG. 1 is a schematic front view of an illustrative multi-chamber container showing a first chamber, a second chamber, an easy peel seal separating the first and second chambers, and a perimeter seal defining an outer boundary of the container.
FIG. 2 is a schematic cross-sectional view of opposing multilayer films of a multi-chamber container, showing a first multilayer film and a second multilayer film, each comprising an outer layer, a core layer, and an easy peel layer, with the easy peel layers positioned facing one another.
FIG. 3 is a graph showing average seal strength as a function of sealing temperature for easy peel layer formulations comprising random copolymer polypropylene and hydrogenated styrenic block copolymers.
FIG. 4 is a graph showing average seal strength as a function of sealing temperature for easy peel layer formulations comprising terpolymer polypropylene and hydrogenated styrenic block copolymers.

### DESCRIPTION

The following terms will be used throughout the specification:
"Consisting essentially of" means that the claimed composition primarily contains the specified materials, with allowances for additional components that do not materially affect novel characteristics or function of the claimed invention, with the additional components, if present, in an amount of < 30%, or < 20%, or < 10%.

"At least one of [a group such as A, B, and C]" or "any of [a group such as A, B, or C]" means a single member from the group, more than one member from the group, or a combination of members from the group. For example, at least one of A, B, and C includes, for example, A only, B only, or C only, as well as A and B, A and C, B and C; or A, B, and C, or any other all combinations of A, B, and C.

A list of embodiments presented as "A, B, or C" is to be interpreted as including the embodiments, A only, B only, C only, "A or B," "A or C," "B or C," or "A, B, or C."

"Any of A, B, or C" refers to one option from A, B, or C.

"Any of A, B, and C" refers to one or more options from A, B, and C.

"Copolymer" refers to a polymer derived from more than one species of monomer.

"Block copolymer" refers to a copolymer that comprises more than one species of monomer, wherein the monomers are present in blocks. Each block is constituted of a set of monomer units different from the set of monomers of the connected surrounding blocks in the same block copolymer. Each block can be constituted of a homopolymer or a random copolymer.

"Vinyl aromatic unit content" or VAC of a block copolymer refers to the weight percentage of polymerized vinyl aromatic monomers, e.g., styrene, para-methylstyrene, etc., in the block copolymer. VAC is calculated by dividing the total molecular weight of all vinyl aromatic units by the total molecular weight of the block copolymer. It can be determined by using proton nuclear magnetic resonance spectroscopy (¹H NMR) and/or ¹³C NMR. VAC is sometimes used interchangeably with PSC (polystyrene content).

"Butylene unit content" refers to the content, in weight %, of the butylene units ("B") relative to all diene-based units in a given polymer (e.g., hydrogenated block copolymer). The butylene units are formed through the polymerization of 1,3-butadiene monomer via 1,2-addition, followed by hydrogenation. The 1,3-butadiene monomer can also polymerize through 1,4-addition, which, upon hydrogenation, results in ethylene units ("E"). Both butylene and ethylene units can be present in the hydrogenated block copolymer, which can also contain vinyl aromatic units and/or other units derived from conjugated diene monomers, arranged in any order. The butylene unit content can be measured by ¹H NMR and ¹³C NMR.

"Molecular weight" or M_{w} refers to the polystyrene equivalent molecular weight in g/mol of a polymer block or a block copolymer. M_{w} can be measured with gel permeation chromatography (GPC) using polystyrene calibration standards, such as is done according to ASTM 5296. The GPC detector can be an ultraviolet or refractive index detector or a combination thereof. The chromatograph is calibrated using commercially available polystyrene molecular weight standards. M_{w} of polymers measured using GPC so calibrated are polystyrene equivalent molecular weights or apparent molecular weights. M_{w} expressed herein is measured at the peak of the GPC trace and are commonly referred to as polystyrene equivalent "peak molecular weight," designated as Mₚ.

"HSBC" refers to a hydrogenated styrenic block copolymer that is partially or fully hydrogenated. HSBC is based on blocks of conjugated diene and styrenic monomers in which fraction of the double bonds resulting from the conjugated diene units have been reduced or hydrogenated. The HSBC is hydrogenated to a hydrogenation level of > 80%, or > 90%, or > 95%, or > 99%. The aromatic bonds have been reduced or hydrogenated to a hydrogenation level of 0 to 15%.

"Hydrogenation level" (H2%) refers to the level of saturation of the olefinic double bonds into the block copolymer, which can be determined using UV-VIS spectrophotometry and / or ¹HNMR and / or via ozonolysis titration.

"Residual Unsaturation (RU)" refers to the levels of unsaturation, i.e., carbon-carbon double bonds per gram of block copolymer. RU can be measured using nuclear magnetic resonance (¹HNMR) or ozonolysis titration.

"Unit" refers to the structural building block derived from one monomer following its polymerization, representing a repeating entity that forms part of the polymer or copolymer chain. Unlike a "monomer," which is the individual molecule before polymerization, a "unit" is the transformed version of the monomer after undergoing the polymerization process. A polymerized unit can be further transformed into a hydrogenated unit or a functionalized unit.

"Coupling efficiency" or CE refers to the weight % of coupled polymer molecules relative to the total weight of both coupled and uncoupled polymer molecules. CE is expressed as a percentage (%) and can be used to estimate the content of diblock structures or, more generally, the proportion of "uncoupled arms" in the block copolymer. For example, a CE of 80% indicates that the block polymer contains 20 wt.% diblock (uncoupled) species and 80 wt.% triblock and multi-arm species.

"Polydispersity index" or PDI refers to a ratio of a weight average molecular weight (M_{w}) to a number average molecular weight (Mₙ), sometimes also called as molecular weight distribution. PDI is used to indicate distribution of polymer chain molecular weights in a given polymer.

Shore A hardness of HSBC is measured according to ASTM D2240.

Elongation at break of HSBC is measured according to ASTM D412.

Tensile strength of HSBC is measured according to ASTM D412.

Melt flow rates (MFRs) are measured according to ASTM D1238.

"Film" or "multilayer film" refers to a multilayer structure comprising two or more layers, including but not limited to outer layers, core layers, seal layers, and optional tie or barrier layers. "Film layer" or simply "layer" refers to an individual component of the overall film structure. In some contexts, a three-layer film is referred to as a multilayer film, where the number of layers is either specified or implied by context.

"Easy peel layer" and "mid-seal layer" may be used interchangeably and refer to a layer of the film that is designed to form an easy peel seal. The easy peel layer is the portion of the film structure that enables formation of a peelable seal between adjacent chambers of a multi-chamber container.

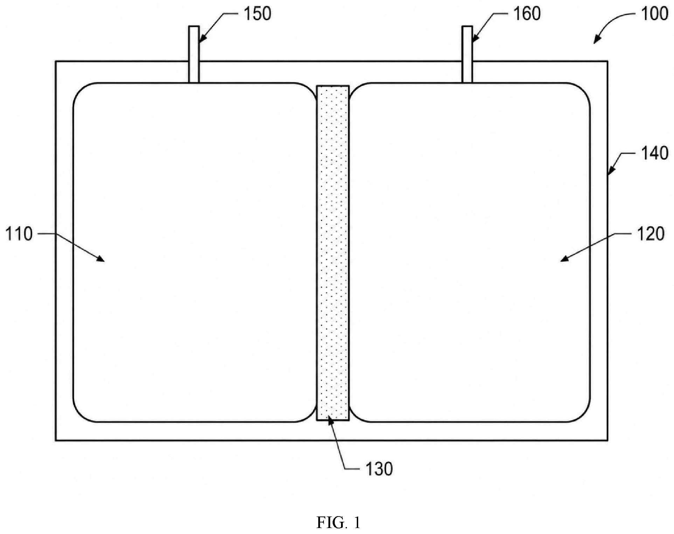

FIG. 1 illustrates a schematic example of a multi-chamber container 100 comprising a first chamber 110 and a second chamber 120. The first chamber 110 and the second chamber 120 are separated by an easy peel seal 130. The easy peel seal 130 provides a frangible or peelable barrier between adjacent chambers such that contents of the first chamber 110 and the second chamber 120 can be maintained separately until activation by a user. The multi-chamber container 100 further comprises a perimeter seal 140 extending along an outer boundary of the container. The perimeter seal 140 and the easy peel seal 130 are examples of selected seal regions at which opposing multilayer films are sealed to one another. In embodiments, the container 100 further includes one or more access ports, such as a first access port 150 and a second access port 160. FIG. 1 is schematic and not necessarily to scale, and the container may have other shapes, chamber arrangements, port configurations, or seal geometries.

The disclosure relates to a multi-chamber container comprising opposing multilayer films sealed together at selected seal regions to define one or more chambers. In embodiments, each multilayer film comprises at least three layers, including an outer layer, a core layer, and an easy peel layer. The easy peel layers of the opposing multilayer films are positioned facing one another. The selected seal regions include peripheral seal regions forming a perimeter seal defining an outer boundary of the container and one or more intermediate seal regions forming easy peel seals separating adjacent chambers. Portions of the opposing multilayer films between the selected seal regions remain unsealed and define chamber spaces for receiving contents. The easy peel layer contains polypropylene and hydrogenated styrenic block copolymers.

Multilayer Film: In embodiments, each multilayer film comprises an outer layer, a core layer, and an easy peel layer arranged such that the core layer is positioned between the outer layer and the easy peel layer. In embodiments, the first multilayer film and the second multilayer film have the same layer structure and composition. In other embodiments, the first multilayer film and the second multilayer film differ from one another in one or more of layer composition, layer thickness, polypropylene type, hydrogenated styrenic block copolymer type, or hydrogenated styrenic block copolymer blend ratio, provided that the easy peel layers of the first and second multilayer films are positioned facing one another.

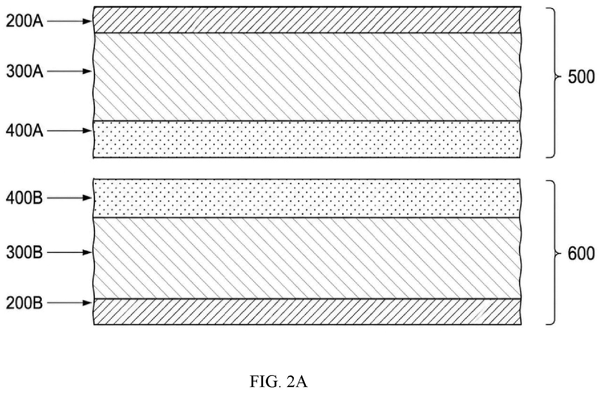

FIG. 2 illustrates a schematic cross-sectional view of opposing multilayer films of a multi-chamber container. A first multilayer film 500 includes an outer layer 200A, a core layer 300A, and an easy peel layer 400A. A second multilayer film 600 includes an outer layer 200B, a core layer 300B, and an easy peel layer 400B. The easy peel layer 400A of the first multilayer film 500 is positioned facing the easy peel layer 400B of the second multilayer film 600. In embodiments, the first multilayer film 500 and the second multilayer film 600 are sealed to one another at selected seal regions, including peripheral seal regions that form a perimeter seal and one or more intermediate seal regions that form one or more easy peel seals between adjacent chambers. Portions of the first multilayer film 500 and the second multilayer film 600 between the selected seal regions remain unsealed to define chamber spaces. The relative layer thicknesses shown in FIG. 2 are schematic and not necessarily to scale.

Outer Layer: The outer layer of the multilayer film provides mechanical strength, puncture resistance, and thermal stability during processing and sterilization.

In embodiments, the outer layer comprises one or more polyolefins, polyamides, polyesters, ethylene-vinyl acetate, or mixtures thereof. In embodiments, the outer layer comprises a polyolefin. As used herein, the term polyolefin includes polypropylene (PP), polyethylene (PE), polybutene-1 (PB-1), and mixtures or blends of these polymers.

In embodiments, the outer layer comprises polypropylene. Polypropylene offers high stiffness, thermal stability, and processability, making it suitable for use as the exterior layer of multi-chamber container films. Suitable types of polypropylene include homopolymer polypropylene, random copolymer polypropylene, and block (impact) copolymer polypropylene. In embodiments, homopolymer polypropylene is used due to its high modulus, dimensional stability, and compatibility with common sterilization techniques such as steam autoclaving. In embodiments, homopolymer polypropylene has a melting point of 150-175°C, or 155-170°C, or 160-170°C. In embodiments, homopolymer polypropylene has a melt flow rate of 1-15, or 1-10, or 5-10, (230°C, 2.16 kg).

In embodiments, the outer layer comprises polyethylene. Examples of polyethylene include high-density polyethylene (HDPE), linear low-density polyethylene (LLDPE), metallocene-catalyzed polyethylene (mPE), and mixtures thereof. HDPE is useful for applications requiring high tensile strength and chemical resistance, while LLDPE and mPE provide enhanced flexibility, impact resistance, and sealing performance. Polyethylene can be used alone or in blends with polypropylene to adjust the mechanical properties of the outer layer.

In embodiments, the outer layer comprises polybutene-1 (PB-1) or a blend of PB-1 and polypropylene. PB-1 provides good optical clarity, elasticity, and sealability, and can be used to fine-tune the sealing behavior or softness of the outer surface. Although less common in medical packaging than PP or PE, PB-1 is suitable for certain film constructions where flexibility or low sealing temperature is desired.

In embodiments, the outer layer comprises a single polyolefin or a blend of polyolefins tailored to meet specific processing requirements or performance targets.

In embodiments, the outer layer comprises a blend of polypropylene with one or more additional polymers selected from polyethylene, ethylene-vinyl acetate, polyamides, polyesters, and polybutene-1. In such embodiments, polypropylene is present in an amount of 60-95 wt.%, or 70-90 wt.%, and the one or more additional polymers are present in a total amount of 5-40 wt.%, or 10-30 wt.%, based on the total weight of the outer layer.

In embodiments, the one or more additional polymers are selected to adjust mechanical properties, flexibility, or sealing behavior of the outer layer.

In embodiments, the outer layer comprises up to 100 wt.%, or > 99 wt.%, or > 95 wt.%, or 90-100 wt.% homopolymer polypropylene.

In embodiments, the outer layer has a thickness of 10-30 µm, or 15-25 µm.

Core Layer: In embodiments, the core layer comprises one or more olefin-based polymers and one or more hydrogenated styrenic block copolymers (HSBCs). The core layer of the multilayer film provides structural integrity to the film while imparting flexibility and toughness, and supports controlled deformation during sealing and use, particularly in films having peelable mid-seals.

In embodiments, the one or more olefin-based polymers are selected from polypropylene, polyethylene, polybutene-1, ethylene-propylene rubbers, ethylene-octene copolymers, ethylene-hexene copolymers, ethylene-butene copolymers, and mixtures thereof.

In embodiments, the one or more olefin-based polymers comprise polypropylene, polyethylene, polybutene-1, or mixtures thereof. In embodiments, the one or more olefin-based polymers comprise polypropylene selected from homopolymer polypropylene, random copolymer polypropylene (RCPP), block (impact) copolymer polypropylene, and mixtures thereof.

Random copolymer polypropylene (RCPP) contains comonomer units, such as ethylene, randomly distributed along the polypropylene backbone, resulting in reduced crystallinity and improved flexibility relative to homopolymer polypropylene. In embodiments, RCPP has a melt flow rate of 1 - 15, or 2 - 15, or 1-10 g/10 min (230°C, 2.16 kg).

Block (impact) copolymer polypropylene comprises a polypropylene matrix with dispersed elastomeric domains, providing improved impact resistance and toughness, and can be used alone or in combination with other olefin-based polymers.

In embodiments, the one or more olefin-based polymers comprise polyethylene, such as high-density polyethylene (HDPE), linear low-density polyethylene (LLDPE), metallocene polyethylene (mPE), or mixtures thereof, which can be used to improve flexibility and toughness of the core layer.

In embodiments, the one or more olefin-based polymers comprise polybutene-1 (PB-1), which can be used alone or in combination with other olefin-based polymers to adjust flexibility, sealing behavior, or modulus.

In embodiments, the one or more olefin-based polymers comprise one or more olefin-based elastomers or plastomers, such as ethylene-propylene rubber (EPR), ethylene-octene copolymers, ethylene-hexene copolymers, ethylene-butene copolymers, or mixtures thereof. Such materials can be used to adjust flexibility, toughness, modulus, or sealing behavior of the core layer.

In embodiments, the one or more HSBCs are selected from styrene-ethylenebutylene-styrene (SEBS), styrene-ethylene-propylene-styrene (SEPS), and mixtures thereof. These elastomers provide elasticity, thermal resilience, and compatibility with polypropylene. In embodiments, the one or more HSBCs are present in the core layer in an amount of 5-40 wt.%, or 10-40 wt.%, or 15-30 wt.%, or 20-30 wt.%, based on the total weight of the core layer.

In embodiments, the core layer comprises 60-90 wt.%, or 65-85 wt.%, or 70-80 wt.% of one or more olefin-based polymers and 10-40 wt.%, or 15-35 wt.%, or 20-30 wt.% of one or more HSBCs, based on the total weight of the core layer.

In embodiments, the core layer comprises 60-90 wt.%, or 65-85 wt.%, or 70-80 wt.% of random copolymer polypropylene and 10-40 wt.%, or 15-35 wt.%, or 20-30 wt.% of one or more HSBCs, based on the total weight of the core layer.

In embodiments, the core layer has a thickness of 120-160 µm, or 120-155 µm, or 125-160 µm, or 125-155 µm, or 130-150 µm, or 135-145 µm.

Easy Peel Layer: The easy peel layer comprises, consists essentially of, or consists of: (a) polypropylene selected from homopolymer polypropylene, random copolymer polypropylene (RCPP), ternary copolymer polypropylene (terpolymer PP), or mixtures thereof; and (b) a blend of at least two hydrogenated styrenic block copolymers (HSBCs). The blend of at least two hydrogenated styrenic block copolymers enables control of seal strength and peel behavior across a sealing temperature range. In embodiments, combinations of hydrogenated styrenic block copolymers having different diblock contents are associated with formation of seals exhibiting stable cohesive peel behavior across a broader sealing temperature window, relative to compositions containing a single hydrogenated styrenic block copolymer.

In embodiments, the polypropylene comprises a random copolymer polypropylene (RCPP), a ternary copolymer polypropylene (terpolymer PP), or a mixture thereof.

In embodiments, the easy peel layer comprises, consists essentially of, or consists of 60-90 wt.%, or 65-85 wt.%, or 70-85 wt.%, or 75-85 wt.%, or > 50 wt.%, or < 95 wt.%, or < 90 wt.% polypropylene, and 10-40 wt.%, or 15-35 wt.%, or 15-30 wt.%, or 15-25 wt.% HSBCs, based on the total weight of the easy peel layer.

In embodiments, the easy peel layer comprises, consists essentially of, or consists of 60-90 wt.%, or 65-85 wt.%, or 70-85, or 75-85 wt.%, or > 50 wt.%, or < 95 wt.%, or < 90 wt.% polypropylene comprising a random copolymer polypropylene (RCPP), a ternary copolymer polypropylene (terpolymer PP), or mixtures thereof, and of 10-40 wt.%, or 15-35 wt.%, or 15-30 wt.%, or 15-25 wt.% HSBCs, based on the total weight of the easy peel layer.

In embodiments, the easy peel layer has a thickness of 30-60 µm, or 30-55 µm, 30-50 µm, or 35-60 µm, or 35-55 µm, or 40-50 µm.

(Random Copolymer Polypropylene): In embodiments, a random copolymer polypropylene ("RCPP") is used in the easy peel layer. RCPP is a semi-crystalline thermoplastic polymer derived from the copolymerization of propylene with a minor amount of ethylene, typically in the range of 1-7% by weight. The ethylene units are randomly distributed along the polymer backbone, which disrupts the regular crystalline structure of isotactic polypropylene and leads to a reduction in crystallinity. As a result, RCPP exhibits enhanced flexibility, improved impact resistance, and a lower melting point, while still retaining favorable thermal and chemical resistance properties.

In embodiments, RCPP has a melting temperature of 130-160°C, or 140-160°C, or 145-155°C. In embodiments, RCPP has a melt flow rate of 1-15 g/10 min, or 1-10 g/10 min, or 5-10 g/10 min, (230°C, 2.16 kg).

(Ternary Copolymer Polypropylene): In embodiments, a ternary copolymer polypropylene ("terpolymer PP") is used in the easy peel layer. Terpolymer PP is a modified polypropylene resin obtained by the copolymerization of propylene, ethylene, and a third α-olefin comonomer, such as butene-1, hexene-1, or octene-1. The incorporation of two comonomers disrupts the crystalline structure of the polymer to an even greater extent than in random copolymer polypropylene (RCPP), resulting in a material with significantly lower stiffness, reduced melting temperature, and enhanced elasticity. In embodiments, the total comonomer content of the terpolymer PP is 5-15 wt.%, based on the total weight of the terpolymer PP.

The use of a lower melting polypropylene, such as terpolymer polypropylene, can enhance chain mobility at the sealing interface and promote interaction between different HSBC species, thereby contributing to broadening of the sealing temperature window.

In embodiments, terpolymer PP exhibits a melting point in the range of 120-140°C, or 120-135°C, or 130-135°C. In embodiments, terpolymer PP has a melt flow rate of 1-15, or 1-10, or 3-9, or 4-8 (230°C, 2.16 kg).

(Homopolymer Polypropylene): Homopolymer polypropylene ("homo PP") can also be used as the polyolefin component of the core layer. Homo PP is a semi-crystalline thermoplastic polymer consisting entirely of propylene monomer units arranged in a highly isotactic configuration, which leads to a high degree of crystallinity, typically in the range of 50-70% by weight. This high crystallinity results in a material with high stiffness, dimensional stability, and a relatively high melting point, typically between 160 °C and 165 °C. Compared to random or terpolymer polypropylene, homo PP generally exhibits higher modulus and lower flexibility, making it particularly suitable for structural applications where mechanical rigidity is prioritized.

In embodiments, homo PP exhibits a melting point in the range of 150-180°C, or 155-175°C, or 160-170°C. In embodiments, homo PP exhibits a melt flow rate (MFR) in the range of 2-10, or 5-10 g/10 min (230 °C/2.16 kg), enabling consistent processing in blown or cast film extrusion systems.

(Hydrogenated Styrenic Block Copolymers (HSBC)): The easy peel layer comprises a blend of two or more hydrogenated styrenic block copolymers (HSBCs). Each HSBC in the blend is obtained by hydrogenating a styrenic block copolymer (SBC) precursor. The SBC precursor can comprise diblock, triblock, tetrablock, pentablock, multi-arm block copolymer structures, or mixtures thereof.

In embodiments, each HSBC in the blend is independently a linear or branched (multi-armed) block copolymer comprising at least one block "S" composed of vinyl aromatic units, and at least one block "E/B" composed of ethylene units and butylene units.

In embodiments, each HSBC in the blend independently has a general structure selected from: S-E/B-S, (S-E/B)ₙX, (S-E/B-S)ₙX, and mixtures thereof; wherein n is an integer from 2 to 30, and X is a residue of a coupling agent. Each block "S" comprises polymerized vinyl aromatic units derived from one or more vinyl aromatic monomers, and each block "E/B" comprises ethylene units and butylene units derived from hydrogenated conjugated diene units.

In embodiments, the coupling agent includes bi- or polyfunctional compounds, for example divinylbenzene, halides of aliphatic or araliphatic hydrocarbons, such as 1,2-dibromoethane, bis(chloromethyl)benzene, silicon tetrachloride, dialkyl- or diarylsilicon dichloride, alkyl- or arylsilicon trichloride, tin tetrachloride, alkylsilicon methoxides, alkyl silicon ethoxides, polyfunctional aldehydes, such as terephthalic dialdehyde, ketones, esters, anhydrides, or epoxides. In embodiments, the coupling agent is selected from methyltrimethoxysilane, methyltriethoxysilane, tetramethoxysilane, dimethyladipate, gamma-glycidoxypropyltrimethoxy silane, and mixtures thereof.

In embodiments, suitable vinyl aromatic monomers for forming the vinyl aromatic units of block "S" include styrene, para-methylstyrene, para-ethylstyrene, para-n-propylstyrene, para-iso-propylstyrene, para-n-butylstyrene, para-sec-butylstyrene, para-isobutylstyrene, para-t-butylstyrene, isomers of para-decylstyrene, isomers of para-dodecylstyrene, ortho-substituted styrene, meta-substituted styrene, alpha-methylstyrene, 1,1-diphenylethylene, and mixtures thereof.

In embodiments, one or more HSBCs in the blend are functionalized with at least one functional group, e.g., hydroxyl group, amino group, carboxyl group, acid anhydride group, epoxy group, isocyanate group, silanol group, silane group, or combinations thereof.

In embodiments, each HSBC in the blend independently comprises a mixture of diblock and coupled block copolymer species. In embodiments, the diblock content of each HSBC is 1-95 wt.%, or 5-95 wt.%, or 5-85 wt.%, or 5-75 wt.%, based on the total weight of the HSBC.

In embodiments, each HSBC in the blend independently has a coupling efficiency (CE) of 20-98%, or > 20%, or < 99%.

In embodiments, each block "E/B" independently has a residual unsaturation (RU) of 0-0.5, or 0.01-0.4, or 0.05-0.5, or < 0.5, or < 0.4, or < 0.3, or < 0.2, or < 0.1 meq/g, as measured by ¹H NMR.

In embodiments, each HSBC in the blend independently has a butylene unit ("B") content of 20-95, or 30-95, or 30-90, or 35-85, or 40-80, or > 20, or > 35, or < 85 wt.%, based on total weight of the block "E/B" of the respective HSBC.

In embodiments, each HSBC in the blend independently has a total VAC of 5-45 wt.%, or 8-45 wt.%, or 10-40 wt.%, or > 8 wt.%, or > 10 wt.%, or < 40 wt.%, based on the total weight of the respective HSBC.

In embodiments, each block "S" of each HSBC independently has a peak molecular weight (Mₚ) of 2-20, or 3-18, or 4-15, or 3-12, or > 2, or > 4, or < 15 kg/mol.

In embodiments, block "E/B" of each HSBC independently has a peak molecular weight (Mₚ) of 20-240, or 30-240, or 30-230, or 40-220, or 90-240, or 95-230, or 100-220, or 110-210 kg/mol.

In embodiments, each HSBC in the blend independently has a peak molecular weight (Mₚ) of 50-250, or 50-225, or 60-225, or 70-225 kg/mol.

In embodiments, each HSBC in the blend independently has a melt flow rate (MFR) of 1-25, or 1-20, or 1-15, or 2-14 g/10 min, measured at 230°C under a 2.16 kg load.

In embodiments, the blend comprises at least two HSBCs having different diblock contents. For purposes of describing HSBC blends in such embodiments, a low-diblock HSBC refers to an HSBC having a diblock content of 3-15 wt.%, an intermediate-diblock HSBC refers to an HSBC having a diblock content of 20-40 wt.%, and a high-diblock HSBC refers to an HSBC having a diblock content of 50-95 wt.%, each based on the total weight of the respective HSBC.

In embodiments, each HSBC has a combination of two or more of the following: a butylene unit ("B") content of 20-95 wt.%, or 30-95 wt.%, or 30-90 wt.%, or 35-85 wt.%, or 40-80 wt.%, based on the total weight of the E/B block; a vinyl aromatic content (VAC) of 5-45 wt.%, or 8-40 wt.%, or 10-35 wt.%, based on the total weight of the HSBC; a block "S" peak molecular weight (Mp) of 2-20 kg/mol, or 3-18 kg/mol; a block copolymer peak molecular weight (Mp) of 50-250 kg/mol, or 50-225 kg/mol; a coupling efficiency of 20-99%, or 25-95%; and a diblock content of 1-95 wt.%, or 5-95 wt.%, or 5-85 wt.%, based on the total weight of the HSBC.

In embodiments, at least one HSBC in the blend is a low-diblock HSBC having a general structure selected from S-E/B-S, (S-E/B)nX, (S-E/B-S)nX, and mixtures thereof, wherein n is an integer from 2 to 30 and X is a residue of a coupling agent. In embodiments, the low-diblock HSBC has a block copolymer Mp of 180-250 kg/mol, or 190-250 kg/mol; a diblock content of 3-15 wt.%, or 3-10 wt.%; and a VAC of 5-25 wt.%, or 5-20 wt.%, or 10-15 wt.%, based on the total weight of the low-diblock HSBC. In embodiments, the low-diblock HSBC further has one or more of: a butylene unit content of 65-95 wt.%, or 70-90 wt.%, or 70-85 wt.%, based on the total weight of the E/B block; a block "S" Mp of 3-12 kg/mol, or 5-10 kg/mol; a coupling efficiency of 85-99%, or 90-95%; a melt flow rate of 2-15 g/10 min, or 2-10 g/10 min, or 2-5 g/10 min, measured at 230°C under a 2.16 kg load; a tensile strength of 2-15 MPa, or 5-15 MPa; an elongation at break of 500-750%, or 550-650%; and a Shore A hardness of 25-50, or 30-45, or 30-40, measured after 10 seconds.

In embodiments, at least one HSBC in the blend is an intermediate-diblock HSBC having a general structure selected from S-E/B-S, (S-E/B)nX, (S-E/B-S)nX, and mixtures thereof, wherein n is an integer from 2 to 30 and X is a residue of a coupling agent. In embodiments, the intermediate-diblock HSBC has a block copolymer Mp of 100-200 kg/mol, or 125-175 kg/mol, or 130-160 kg/mol; a diblock content of 10-50 wt.%, or 20-40 wt.%, or 25-35 wt.%; and a VAC of 5-25 wt.%, or 5-20 wt.%, or 10-15 wt.%, based on the total weight of the intermediate-diblock HSBC. In embodiments, the intermediate-diblock HSBC further has one or more of: a butylene unit content of 30-60 wt.%, or 35-55 wt.%, or 40-50 wt.%, based on the total weight of the E/B block; a block "S" Mp of 3-12 kg/mol, or 3-10 kg/mol; a coupling efficiency of 60-85%, or 60-80%, or 65-75%; a melt flow rate of 5-25 g/10 min, or 5-20 g/10 min, or 5-15 g/10 min, measured at 230°C under a 2.16 kg load; a tensile strength of 5-40 MPa, or 10-35 MPa, or 20-25 MPa; an elongation at break of 550-850%, or 600-800%, or 700-800%; and a Shore A hardness of 30-60, or 35-55, or 40-55, measured after 10 seconds.

In embodiments, at least one HSBC in the blend is a high-diblock HSBC having a general structure selected from S-E/B-S, (S-E/B)nX, (S-E/B-S)nX, and mixtures thereof, wherein n is an integer from 2 to 30 and X is a residue of a coupling agent. In embodiments, the high-diblock HSBC has a block copolymer Mp of 50-150 kg/mol, or 50-100 kg/mol, or 60-90 kg/mol, or 65-80 kg/mol; a diblock content of 50-95 wt.%, or 60-90 wt.%, or 60-80 wt.%, or 65-75 wt.%; and a VAC of 15-45 wt.%, or 20-40 wt.%, based on the total weight of the high-diblock HSBC. In embodiments, the high-diblock HSBC further has one or more of: a butylene unit content of 20-50 wt.%, or 30-45 wt.%, based on the total weight of the E/B block; a block "S" Mp of 3-12 kg/mol, or 3-10 kg/mol; a coupling efficiency of 20-50%, or 20-40%, or 25-35%; a melt flow rate of 5-25 g/10 min, or 15-25 g/10 min, measured at 230°C under a 2.16 kg load; a tensile strength of 1-15 MPa, or 1-10 MPa, or 1-5 MPa; an elongation at break of 50-350%, or 100-300%, or 150-250%; and a Shore A hardness of 40-80, or 50-70, or 55-65, measured after 10 seconds.

In embodiments, the HSBC component of the easy peel layer comprises a blend of two HSBCs, three HSBCs, or more than three HSBCs. In embodiments, the HSBCs in the blend differ from one another in one or more of molecular weight, diblock content, vinyl aromatic content, butylene unit content, coupling efficiency, melt flow rate, or combinations thereof.

In embodiments where the HSBC component is a blend of two HSBCs, the weight ratio of a first HSBC in the blend to a second HSBC in the blend ranges from 1.5:1 to 2.5:1, or from 1.6:1 to 2.4:1, or from 1.7:1 to 2.3:1, or from 1.8:1 to 2.2:1, or from 1.9:1 to 2.1:1. In embodiments where the HSBC component is a blend of three HSBCs, the weight ratio of a first HSBC in the blend to a second HSBC in the blend to a third HSBC in the blend ranges from 3:1:1 to 5:1:1, or from 3.5:1:1 to 4.5:1:1, or from 3.8:1:1 to 4.2:1:1, or from 3.9:1:1 to 4.1:1:1.

In embodiments, the easy peel layer further comprises one or more optional thermoplastic or elastomeric modifiers selected from linear low-density polyethylene (LLDPE), very low-density polyethylene (VLDPE), metallocene-catalyzed polyethylene (mPE), ethylene-octene copolymers, ethylene-hexene copolymers, ethylene-butene copolymers, polybutene-1 (PB-1), ethylene-propylene rubber (EPR), ethylene-propylene-diene rubber (EPDM), and mixtures thereof. In embodiments, the optional modifier is present in an amount of up to 30 wt.%, or 1-20 wt.%, or 1-10 wt.%, based on the total weight of the easy peel layer.

Methods of Making: The multilayer film can be prepared by any suitable multilayer film-forming technique, including blown film coextrusion or cast film coextrusion. In embodiments, the outer layer, core layer, and easy peel layer are coextruded to form a multilayer film in which the core layer is positioned between the outer layer and the easy peel layer.

The multilayer film is converted into a multi-chamber container by positioning a first multilayer film and a second multilayer film in opposing relationship such that the easy peel layer of the first multilayer film faces the easy peel layer of the second multilayer film. In embodiments, the first multilayer film and the second multilayer film are separate film sheets. In other embodiments, the first multilayer film and the second multilayer film are opposing portions of a folded multilayer film.

The first multilayer film and the second multilayer film are sealed to one another at selected seal regions, rather than across the entire facing surfaces of the films. In embodiments, peripheral seal regions are formed along edge portions of the first multilayer film and the second multilayer film to form a perimeter seal defining an outer boundary of the multi-chamber container. Portions of the first multilayer film and the second multilayer film located inward of the perimeter seal remain unsealed to define chamber spaces for receiving contents.

One or more intermediate seal regions are formed between chamber spaces to form one or more easy peel seals separating adjacent chambers. In embodiments, an easy peel seal is formed by sealing the easy peel layer of the first multilayer film to the easy peel layer of the second multilayer film under conditions selected to provide a seal that maintains separation between adjacent chambers during storage and handling, while remaining peelable or frangible upon user activation to place the adjacent chambers in fluid communication.

In embodiments, the perimeter seal and the easy peel seal are formed under different sealing conditions. For example, the easy peel seal may be formed using a different sealing temperature, pressure, dwell time, seal width, seal geometry, or combination thereof relative to the perimeter seal. In embodiments, easy peel seals are formed at temperatures of 100-160 °C, or 110-150 °C, or 110-140 °C; pressures of 0.2-1.0 MPa, or 0.3-0.6 MPa; and dwell times of 0.5-5 seconds, or 1-3 seconds.

Optional ports, tubes, valves, or access sites can be incorporated into the container using additional welding or sealing steps. In embodiments, the final assembly is sterilized using steam, gamma irradiation, or other suitable sterilization methods compatible with the multilayer film construction and intended contents.

Properties: In embodiments, the multilayer film has a thickness of 160-250 µm, or 165-250 µm, or 175-250 µm, or 180-250 µm, or 160-230 µm, or 175-230 µm. In embodiments, films having lower thicknesses, such as about 100-150 µm, are used for testing purposes while maintaining layer thickness ratios representative of the multilayer film described herein.

In embodiments, the easy peel seal, which separates adjacent chambers and is designed to be peelable or frangible at the point of use, exhibits a peel strength of 1-25 N/15 mm, or 2-25 N/15 mm, or 3-25 N/15 mm, or 1-20 N/15 mm, as measured according to ASTM F88.

In embodiments, the easy peel seal exhibits a peel strength of >3%, or >5%, or <75%, or <50%, or from 5-80%, or 5-70%, or 5-60%, or 5-50% of the peel strength of the perimeter seal. The perimeter seal refers to the seal defining the external boundary of the container and is not intended to be ruptured or peeled during normal use.

The peel strength is determined under standardized conditions, such as ASTM F88, by measuring the average peel force of the easy peel seal. In embodiments, relative seal strength is determined by measuring the average peel force of both the easy peel seal and the perimeter seal under comparable test parameters, such as seal width, test speed, and peel mode. By maintaining the easy peel seal strength below the perimeter seal strength while providing sufficient peel strength for handling and user activation, the container achieves a balance between easy manual opening and resistance to premature rupture during handling or sterilization.

In embodiments, the easy peel seal exhibits cohesive peel behavior and maintains peel strength within one or more of the above-defined ranges over a continuous sealing temperature interval of > 10 °C or > 20 °C within a sealing temperature range of 100-150 °C, thereby providing improved process robustness.

Applications: The multilayer film and multi-chamber container are suitable for applications requiring compartmentalized storage and controlled mixing of components. In embodiments, the container is used in medical, pharmaceutical, nutritional, bioprocessing, food, chemical, or consumer product applications.

In embodiments, the container is a medical fluid container, including intravenous (IV) bags, infusion bags, or total parenteral nutrition (TPN) systems, wherein components are stored in separate chambers and combined prior to administration by activation of one or more easy peel seals.

In embodiments, the container is used for pharmaceutical or drug delivery applications, including reconstitution systems and multi-chamber containers for storing and combining reactive or unstable components prior to use.

In embodiments, the container is used in bioprocessing or laboratory applications for storage and mixing of buffers, reagents, cell culture media, or biological samples.

In embodiments, the container is used for food, beverage, or nutritional products, or for chemical, industrial, personal care, or consumer product applications, wherein components are stored separately and combined prior to use.

In embodiments, the container is used in any application requiring separation of components during storage and controlled mixing at the point of use.

Analytical Methods: The following analytical methods may be used to characterize the structure, composition, and functional performance of the multi-chamber container and its film layers.

Film Layer Identification and Thickness Mapping: Cross-sectional analysis of the film structure can be performed using optical microscopy, scanning electron microscopy (SEM), or focused ion beam scanning electron microscopy (FIB-SEM) following microtome or cryo-microtome sectioning. These methods allow visualization and measurement of at least three distinct layers, including an outer layer, a core layer, and an easy peel layer.

Compositional Analysis of Each Layer: Each film layer can be selectively isolated through physical delamination, solvent washing, or micro-dissection, followed by compositional analysis. Fourier Transform Infrared Spectroscopy (FTIR) and Raman spectroscopy can be used to identify major polymer types (e.g., polyolefins, polyamides, or polyesters) in the outer layer and core layer, and to detect the presence of polypropylene and hydrogenated styrenic block copolymers (HSBCs) in the easy peel layer. Differential Scanning Calorimetry (DSC) can be used to determine melting temperatures and assess crystallinity differences between homopolymer polypropylene, random copolymer polypropylene, and terpolymer polypropylene.

Gel Permeation Chromatography (GPC), optionally conducted at elevated temperature using appropriate solvents, can be used to determine the peak molecular weight (Mp) of HSBC components. When combined with multi-angle light scattering (MALS) and differential refractive index (dRI) detection, GPC can be used to resolve molecular weight distributions and distinguish multiple HSBC components within the easy peel layer. Deconvolution of GPC traces may provide evidence of the presence of two or more distinct HSBC species. In embodiments, multimodal GPC distributions, chromatographic separation, or deconvolution analysis may be used to identify and distinguish HSBC populations corresponding to different ranges of molecular weight and diblock content associated with categories (i), (ii), and (iii)

Nuclear Magnetic Resonance (NMR) spectroscopy, including ¹H NMR, may be used to quantify vinyl aromatic content (VAC) and to characterize block structure in styrenic block copolymers. Diblock content and/or coupling characteristics of HSBC components may be estimated using chromatographic techniques, including liquid chromatography at critical conditions (LCCC), or through analysis of molecular weight distributions and coupling characteristics derived from GPC and NMR data.

In embodiments, analytical techniques are applied to characterize individual HSBC components within the blend to determine whether the blend comprises two or more distinct HSBC components satisfying at least two different defined HSBC categories, wherein each category is defined by a combination of peak molecular weight (Mp), diblock content, and vinyl aromatic content ranges. In embodiments, the analytical techniques are further used to determine whether individual HSBC components independently satisfy the parameter ranges associated with categories (i), (ii), and/or (iii).

Seal Performance Testing: The presence of a peelable seal, its absolute peel strength, and its relative strength may be evaluated using ASTM F88. In embodiments, seal strength is measured by preparing test strips from both the easy peel seal or mid-chamber seal and the perimeter seal of the container and testing in a 180° peel configuration at a standard rate, such as 300 mm/min. The peel strength is reported in units of force per unit width, such as N/15 mm.

The ratio of the peel strength of the easy peel seal to the peel strength of the perimeter seal is determined under comparable test conditions to assess whether the easy peel seal exhibits a peel strength within a defined percentage of the perimeter seal strength. In embodiments, failure mode during peel testing is also recorded to distinguish cohesive peel behavior from adhesive failure or material break.

Examples: The following examples are intended to be non-limiting.

The following test methods are used.

Random PP is a polypropylene random copolymer with a melt flow rate of 8 g/10min (230°C, 2.16kg), flexural modulus of 1000 MPa, and melting temperature of 150°C.

Terpolymer PP is a polypropylene terpolymer with a melt flow rate of 6 g/10min (230°C, 2.16kg), flexural modulus of 700 MPa, and melting temperature of 131°C.

HPP is a polypropylene homopolymer with a melt flow rate of 8 g/10min (230°C, 2.16kg), flexural modulus of 1600 MPa, and melting temperature of 164°C.

SEBS 1 is an (S-EB)ₙX block copolymer with a diblock content of < 5%, a total Mp of 242 kg/mol, a Mp of block "S" of 6.4 kg/mol, a PSC of 13%, a butylene content of 78%, a coupling efficiency of 93%, a residual unsaturation of 0.12 meq/g, and a melt flow rate of 3.3 g/10min (230°C, 2.16 kg).

SEBS 2 is an (S-EB)ₙX block copolymer with a diblock content of 30%, a total Mp of 148 kg/mol, a Mp of block "S" of 5.3 kg/mol, a PSC of 13%, a butylene content of 43.7%, a coupling efficiency of 71%, a residual unsaturation of 0.05 meq/g, and a melt flow rate of 11 g/10min (230°C, 2.16 kg).

SEBS 3 is an (S-EB)ₙX block copolymer with a diblock content of > 70%, a total Mp of 71.5 kg/mol, a Mp of block "S" of 7.1 kg/mol, a PSC of 30%, a butylene content of 38%, a coupling efficiency of 30%, a residual unsaturation of 0.05 meq/g, and a melt flow rate of 15 g/10min (190°C, 2.16 kg).

A three-layer film was made from an outer layer, a core layer, and an easy peel layer where each layer composition was processed in a different single screw extruder, and the three extruders were connected to a single pancake die. The outer layer was made from 100 wt.% HPP and was processed through an extruder at a barrel temperature of 409°F (209°C), with a screw speed of 105 rpm and a torque load of 49%. The melt temperature at the die was 390°F (199°C), with a melt pressure of 608 psi. The core layer was made using 75 wt.% Random PP and 25 wt.% SEBS 1 and was processed through an extruder at a barrel temperature of 410°F (210°C), with a screw speed of 253 rpm and a torque load of 65%. The corresponding melt temperature at the die was 382°F (194°C) and melt pressure was 898 psi. The easy peel layer formulations are as listed in Table 1 and Table 2 below and was processed through an extruder at a barrel temperature of 429°F (221°C), screw speed of 35 rpm, torque of 69%, a melt temperature of 428°F (220°C), and melt pressure of 194 psi.

The combined film was formed using a mandrel with a diameter of 28 mm and blown to a film width of 76 mm. Cooling was achieved with an air blower operating at 1079 rpm. The film was drawn at a haul-off speed of 4.5 ft/min and collected at a wind-up tension of 30%. The outer layer thickness was 17.8 µm, the core layer thickness was 55.9 µm, and the sealing layer thickness was 27.9 µm, having a total thickness of 101.6 µm. This total thickness is lower than the thickness ranges described above; however, the relative thickness ratios of the layers were maintained consistent with those described for the multilayer film.

**Table 1 - Easy Peel Layer Formulations (Random PP-Based)**

| Ingredients | Example 1 | Example 2 | Example 3 | Example 4 | Example 9 |
|---|---|---|---|---|---|
| | wt.% | wt.% | wt.% | wt.% | wt.% |
| Random PP | 80 | 80 | 80 | 80 | 80 |
| SEBS 1 | 20 | 13.3 | 13.3 | 13.3 | |
| SEBS 2 | | 6.7 | | 3.35 | 13.3 |
| SEBS 3 | | | 6.7 | 3.35 | 6.7 |
| Total | 100 | 100 | 100 | 100 | 100 |

**Table 2 - Easy Peel Layer Formulations (Terpolymer PP-Based)**

| Ingredients | Example 5 | Example 6 | Example 7 | Example 8 | Example 10 |
|---|---|---|---|---|---|
| | wt.% | wt.% | wt.% | wt.% | wt.% |
| Terpolymer PP | 80 | 80 | 80 | 80 | 80 |
| SEBS 1 | 20 | 13.3 | 13.3 | 13.3 | |
| SEBS 2 | | 6.7 | | 3.35 | 13.3 |
| SEBS 3 | | | 6.7 | 3.35 | 6.7 |
| Total | 100 | 100 | 100 | 100 | 100 |

Seal Strength Characterization: The seal strength of the easy peel seal was evaluated in accordance with ASTM F88, which is widely used to assess the strength of heat seals in flexible barrier films. The test was conducted on coextruded multilayer film specimens (described above) having a total thickness of approximately 101.6 µm (4.0 mils). Heat seals were formed across the film width in the machine direction (MD), and peel testing was conducted in the transverse direction (TD).

Heat seals were formed using a laboratory heat sealer at a sealing temperature of 120-130°C, selected from within a broader sealing window of 100-150°C, under an applied air pressure of 0.5 MPa and a dwell time of 2 seconds. The sealing jaws were flat, and the seal width was set at 15 mm.

Seal strength testing was performed using a tensile testing machine configured in accordance with ASTM F88. The crosshead speed was 300 mm/min, and the initial grip separation was 20 mm. Seal strength was recorded in units of N/15 mm.

In the context of the present evaluation, seal strengths obtained at elevated sealing temperatures, such as 140-150°C, correspond to fully fused seals exhibiting material break or non-peel failure modes (e.g., failure modes 3 or 4), and are representative of perimeter seal strength for the multilayer film. Accordingly, the seal strength measured at 150°C is used as a reference value for perimeter seal strength in assessing the relative peel strength of the easy peel seals. Based on this reference, seal strengths measured at lower sealing temperatures corresponding to cohesive peel behavior (failure mode 2) can be expressed as a percentage of the perimeter seal strength, allowing evaluation of easy peel performance relative to the fully fused seal.

The failure mode of each specimen was recorded according to ASTM F88 and related seal evaluation protocols using the following designations: adhesive peel (1), cohesive peel (2), material break at seal (3), material break at grip or outside seal (4), delamination (5), and material elongation (6).

**Table 3 - Seal Strength of Random PP + HSBC (Examples 1-4, 9)**

| | Example 1 | | Example 2 | | Example 3 | | Example 4 | | Example 9 | |
|---|---|---|---|---|---|---|---|---|---|---|
| Temp | Failure Mode | Average | Failure Mode | Average | Failure Mode | Average | Failure Mode | Average | Failure Mode | Average |
| °C | | N/15mm | | N/15mm | | N/15mm | | N/15mm | | N/15mm |
| 100 | 2 | 0.1257 | 2 | 0.1530 | 2 | 0.1272 | 2 | 0.1163 | 2 | 0.138 |
| 110 | 2 | 0.1140 | 2 | 0.1415 | 2 | 0.1025 | 2 | 0.1347 | 2 | 0.1481 |
| 120 | 2 | 0.1775 | 2 | 0.3185 | 2 | 0.2132 | 2 | 0.2081 | 2 | 0.0989 |
| 125 | 2 | 0.3245 | 2 | 1.1543 | 2 | 0.3741 | 2 | 0.4359 | 2 | 0.1685 |
| 130 | 2 | 0.8495 | 2 | 3.4709 | 2 | 1.8135 | 2 | 2.2727 | 2 | 0.1878 |
| 140 | 4 | 25.9389 | 2 | 22.4436 | 1 | 21.0647 | 1 | 28.0238 | 2 | 0.7911 |
| 150 | 4 | 28.7213 | 4 | 33.5234 | 3 | 32.0822 | 4 | 32.5569 | 2 | 6.2234 |

**Table 4 - Seal Strength of Terpolymer PP + HSBC (Examples 5-8, 10)**

| | Example 5 | | Example 6 | | Example 7 | | Example 8 | | Example 10 | |
|---|---|---|---|---|---|---|---|---|---|---|
| Temp | Failure Mode | Average | Failure Mode | Average | Failure Mode | Average | Failure Mode | Average | Failure Mode | Average |
| °C | | N/15mm | | N/15mm | | N/15mm | | N/15mm | | N/15mm |
| 100 | 2 | 0.0816 | 2 | 0.2907 | 2 | 0.2519 | 2 | 0.2457 | 2 | 0.3249 |
| 110 | 2 | 0.2384 | 2 | 2.9994 | 2 | 7.9832 | 2 | 1.3221 | 2 | 2.4825 |
| 120 | 2 | 0.7344 | 1 | 23.3655 | 1 | 26.5919 | 1 | 24.5646 | 2 | 14.91 |
| 125 | 2 | 1.9448 | 3 | 29.2562 | 1 | 23.9768 | 3 | 30.4800 | 3 | 23.87 |
| 130 | 3 | 23.9400 | 3 | 29.7870 | 3 | 27.2958 | 3 | 33.4224 | 3 | 32.30 |
| 140 | 3 | 30.0450 | 4 | 32.5766 | 3 | 30.5657 | 3 | 32.2226 | 3 | 34.86 |
| 150 | 4 | 29.8127 | 3 | 29.1555 | 3 | 29.5409 | 3 | 29.9480 | 3 | 32.22 |

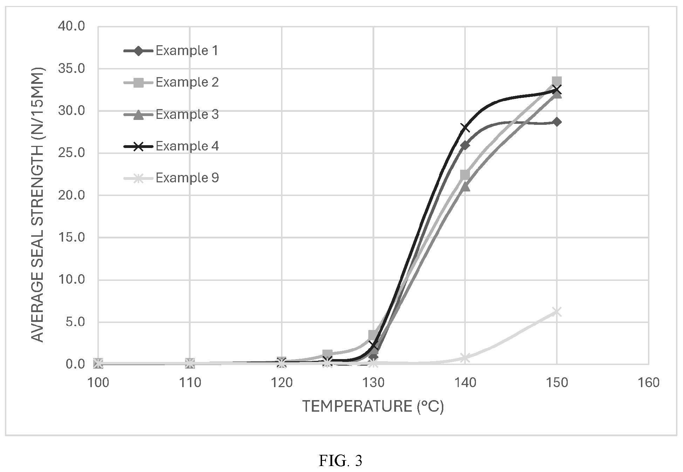

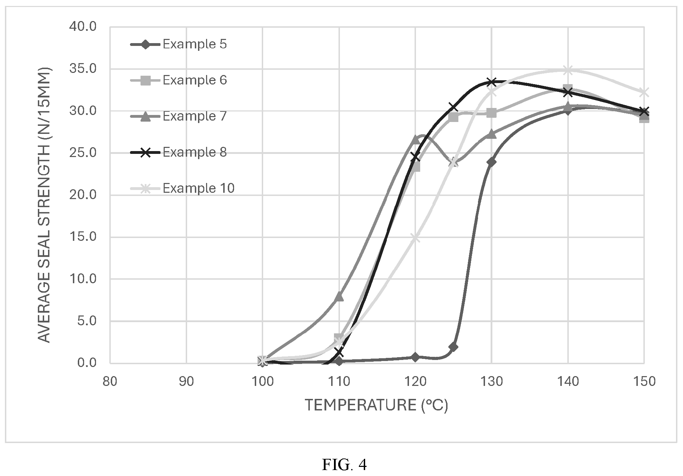

FIG. 3 and FIG. 4 graphically illustrate average seal strength as a function of sealing temperature for the easy peel layer formulations shown in Tables 3 and 4, respectively. FIG. 3 corresponds to formulations comprising random copolymer polypropylene in the easy peel layer, and FIG. 4 corresponds to formulations comprising terpolymer polypropylene in the easy peel layer.

As shown in Tables 3 and 4 and FIGS. 3 and 4, the easy peel seal strength can be adjusted by selecting sealing temperature for a given easy peel layer formulation. Although Tables 3 and 4 report seal strength at discrete sealing temperatures, FIGS. 3 and 4 illustrate the temperature-dependent seal-strength trend and support that seal strengths within a target range can be obtained by selecting sealing conditions within the tested sealing-temperature range. In embodiments, a seal strength within a target range of 5-25 N/15 mm is obtained by selecting a sealing temperature within a sealing-temperature window over which the easy peel layer forms a peelable or frangible seal.

The results demonstrate that both random copolymer polypropylene-based and terpolymer polypropylene-based formulations comprising blends of hydrogenated styrenic block copolymers are capable of forming easy peel seals. The terpolymer polypropylene-based formulations generally develop seal strength at lower sealing temperatures than the random copolymer polypropylene-based formulations, indicating an earlier sealing response and improved low-temperature sealing capability. The results further demonstrate that certain HSBC blend formulations provide cohesive peel behavior over a range of sealing temperatures. Such behavior enables formation of easy peel seals that are less sensitive to sealing temperature variations and provides improved process robustness during manufacture of multi-chamber containers.

## Claims

1. A multi-chamber container comprising:
a first multilayer film, and
a second multilayer film;
wherein each of the first multilayer film and the second multilayer film comprises:
(a) an outer layer comprising one or more of polyolefins, polyamides, polyesters, and mixtures thereof;
(b) a core layer comprising, based on the total weight of the core layer:
10-40 wt.% of one or more hydrogenated styrenic block copolymers, and
60-90 wt.% of one or more olefin-based polymers selected from polypropylene, polyethylene, polybutene-1, ethylene-propylene rubbers, ethylene-octene copolymers, ethylene-hexene copolymers, ethylene-butene copolymers, and mixtures thereof; and
(c) an easy peel layer consisting essentially of, based on the total weight of the easy peel layer:
60-90 wt.% of polypropylene selected from the group of homopolymer polypropylene, random copolymer polypropylene, ternary copolymer polypropylene, and mixtures thereof; and
10-40 wt.% of a blend of two or more hydrogenated styrenic block copolymers, wherein the blend comprises hydrogenated styrenic block copolymers satisfying at least two of (i), (ii), and (iii):
(i) a hydrogenated styrenic block copolymer having a Mp of 180-250 kg/mol, a diblock content of 3-15 wt.%, and a vinyl aromatic content of 5-25 wt.%;
(ii) a hydrogenated styrenic block copolymer having a Mp of 100-200 kg/mol, a diblock content of 20-40 wt.%, and a vinyl aromatic content of 5-25 wt.%; and
(iii) a hydrogenated styrenic block copolymer having a Mp of 50-150 kg/mol, a diblock content of 50-95 wt.%, and a vinyl aromatic content of 15-45 wt.%;
wherein the diblock content and vinyl aromatic content are each based on the total weight of the respective hydrogenated styrenic block copolymer;
wherein the first multilayer film and the second multilayer film are positioned with the easy peel layer of the first multilayer film facing the easy peel layer of the second multilayer film;
wherein the first multilayer film and the second multilayer film are sealed to one another at selected seal regions comprising peripheral seal regions and an intermediate seal region;
wherein the peripheral seal regions form a perimeter seal defining an outer boundary of the multi-chamber container;
wherein unsealed portions of the first multilayer film and the second multilayer film between the selected seal regions define adjacent chambers;
wherein the intermediate seal region forms an easy peel seal separating the adjacent chambers, the easy peel seal being configured to maintain separation between the adjacent chambers during storage and to be manually peelable to place the adjacent chambers in fluid communication; and
wherein the easy peel seal exhibits a peel strength of 5-25 N/15 mm, as measured according to ASTM F88.

2. The multi-chamber container of claim 1, wherein:
the outer layer has a thickness of 10-30 µm;
the core layer has a thickness of 120-160 µm; and
the easy peel layer has a thickness of 30-60 µm.

3. The multi-chamber container of any of claims 1-2, wherein the outer layer comprises a polyolefin, and wherein the polyolefin comprises up to 100 wt.% homopolymer polypropylene.

4. The multi-chamber container of any of claims 1-3, wherein the one or more olefin-based polymers in the core layer consist of polypropylene.

5. The multi-chamber container of claim 4, wherein the polypropylene is a random copolymer polypropylene.

6. The multi-chamber container of any of claims 1-5, wherein the polypropylene in the easy peel layer is selected from the group of random copolymer polypropylene, ternary copolymer polypropylene, and mixtures thereof.

7. The multi-chamber container of any of claims 1-6, wherein the hydrogenated styrenic block copolymers have a general structure of S-E/B-S, (S-E/B)nX, (S-E/B-S)nX, and mixtures thereof, wherein:
n is an integer from 2 to 30;
X is residue of a coupling agent;
each block S is a polymer block composed of vinyl aromatic monomer units; and
each block E/B is a polymer block composed of ethylene units and butylene units.

8. The multi-chamber container of claim 7, wherein the hydrogenated styrenic block copolymers have one or more of the following:
block S has a peak molecular weight (Mp) of 2-20 kg/mol;
butylene unit content of 20-95 wt.%, based on the total weight of the E/B block;
coupling efficiency of 20-98%; and
residual unsaturation of 0-0.5 meq/g.

9. The multi-chamber container of any of claims 1-8, wherein the blend comprises a hydrogenated styrenic block copolymer satisfying (i) and a hydrogenated styrenic block copolymer satisfying (ii).

10. The multi-chamber container of any of claims 1-9, wherein the blend comprises a hydrogenated styrenic block copolymer satisfying (i) and a hydrogenated styrenic block copolymer satisfying (iii).

11. The multi-chamber container of any of claims 1-10, wherein the blend comprises a hydrogenated styrenic block copolymer satisfying (ii) and a hydrogenated styrenic block copolymer satisfying (iii).

12. The multi-chamber container of any of claims 1-11, wherein the blend comprises a hydrogenated styrenic block copolymer satisfying (i), a hydrogenated styrenic block copolymer satisfying (ii), and a hydrogenated styrenic block copolymer satisfying (iii).

13. The multi-chamber container of any of claims 1-12, wherein the easy peel seal exhibits cohesive peel behavior across a continuous sealing temperature interval of at least 10°C within a sealing temperature range of 100-140°C.

14. A film comprising an easy peel layer, the easy peel layer consisting essentially of, based on the total weight of the easy peel layer:
60-90 wt.% of polypropylene selected from the group consisting of homopolymer polypropylene, random copolymer polypropylene, ternary copolymer polypropylene, and mixtures thereof; and
10-40 wt.% of a blend of two or more hydrogenated styrenic block copolymers, wherein the blend comprises hydrogenated styrenic block copolymers satisfying at least two of (i), (ii), and (iii):
(i) a hydrogenated styrenic block copolymer having a Mp of 180-250 kg/mol, a diblock content of 3-15 wt.%, and a vinyl aromatic content of 5-25 wt.%;
(ii) a hydrogenated styrenic block copolymer having a Mp of 100-200 kg/mol, a diblock content of 20-40 wt.%, and a vinyl aromatic content of 5-25 wt.%; and
(iii) a hydrogenated styrenic block copolymer having a Mp of 50-150 kg/mol, a diblock content of 50-95 wt.%, and a vinyl aromatic content of 15-45 wt.%;
wherein the diblock content and vinyl aromatic content are each based on the total weight of the respective hydrogenated styrenic block copolymer.

15. The film of claim 14, further comprising:
a core layer formed on a surface of the easy peel layer, the core layer comprising random copolymer polypropylene and one or more hydrogenated styrenic block copolymers; and
an outer layer formed on the core layer, the outer layer comprising homopolymer polypropylene.
